# EUROPEAN PATENT APPLICATION

(11) **EP 4 455 659 A1**
(43) Date of publication of application: **30.10.2024**
(21) Application number: 22910663.8
(22) Date of filing: 14.11.2022
(51) Int. Cl.: G01N 30/26

(54) **LIQUID CHROMATOGRAPH**

(30) Priority: 21.12.2021 SG 10202114207R
(71) Applicant: Shimadzu Corporation, Nakagyo-ku, Kyoto-shi, Kyoto 604-8511 (JP)
(72) Inventor: NAKAJIMA, Kosuke, Singapore 118264 (SG)
(74) Representative: Müller-Boré & Partner Patentanwälte PartG mbB
(86) International application number: PCT/JP2022/042254
(87) International publication number: WO 2023/119944

(57) **Abstract**

A liquid chromatograph (1) includes a controller (100), a liquid feeding unit (200), a first separation column (410), a second separation column (420), a first switch valve (510), and a second switch valve (520). Each of the first switch valve (510) and the second switch valve (520) has two states. The controller (100) combines the two states of each of the first switch valve (510) and the second switch valve (520) to form first to third forms in a flow path including the first switch valve (510) and the second switch valve (520), thereby providing SARA analysis using the first separation column (410) and the second separation column (420) in the fractionating liquid chromatograph (1).

## Description

### TECHNICAL FIELD

The present disclosure relates to liquid chromatographs, and more particularly, to a liquid chromatograph including two separation columns.

### BACKGROUND ART

Various studies have conventionally been conducted on the analysis of saturate, aromatic, resin, and asphaltene (SARA) components of an oil composite such as crude oil. "SARA" components mean four components, that is, saturate, aromatic, resin, and asphaltene components. An analysis method using two separation columns is disclosed as an example analysis of SARA components (see K.K. (Adry) Bissada, Jingqiang Tan, Ewa Szymczyk, Mike Darnell, Mei, 'Group-type characterization of crude oil and bitumen. Part I: Enhanced separation and quantification of saturates, aromatics, resins and asphaltenes (SARA)', Organic Geochemistry, May 2016, Vol. 95, pp. 21-28 (NPTL 1)).

### CITATION LIST

### NON PATENT LITERATURE

NPL 1: K.K. (Adry) Bissada, Jingqiang Tan, Ewa Szymczyk, Mike Darnell, Mei, 'Group-type characterization of crude oil and bitumen. Part I: Enhanced separation and quantification of saturates, aromatics, resins and asphaltenes (SARA)', Organic Geochemistry, May 2016, Vol. 95, pp. 21-28

### SUMMARY OF INVENTION

### TECHNICAL PROBLEM

In implementation of the method of analyzing SARA components, it is desired to specifically study a configuration of a liquid chromatograph.

### SOLUTION TO PROBLEM

A liquid chromatograph according to an aspect of the present disclosure includes: a first column; a second column; a liquid feeding unit configured to feed a mobile phase to at least one of the first column and the second column; a first switch valve having at least two connection states; a second switch valve connected to the first switch valve and having at least two connection states; and a control unit configured to combine one of the at least two connection states of the first switch valve and one of the at least two connection states of the second switch valve to form a first form, a second form, and a third form in a flow path including the first switch valve and the second switch valve. In the first form, the mobile phase from the liquid feeding unit is fed in order of a first end of the first column, a second end of the first column, a first end of the second column, and a second end of the second column. In the second form, the mobile phase from the liquid feeding unit is not introduced into the first column, and the mobile phase from the liquid feeding unit is fed from the second end of the second column to the first end of the second column. In the third form, the mobile phase from the liquid feeding unit is fed from the second end of the first column to the first end of the first column, and the mobile phase from the liquid feeding unit is not introduced into the second column.

### ADVANTAGEOUS EFFECTS OF INVENTION

The present disclosure provides a configuration of a liquid chromatograph that implements a method of analyzing SARA components.

### BRIEF DESCRIPTION OF DRAWINGS

Fig. 1 shows a configuration of a liquid chromatograph.
Fig. 2 shows a first form of a flow path.
Fig. 3 shows a second form of the flow path.
Fig. 4 shows a third form of the flow path.
Fig. 5 shows a fourth form of the flow path.
Figs. 6 and 7 show a flowchart of a process for analysis of SARA components.

### DESCRIPTION OF EMBODIMENTS

A liquid chromatograph according to an embodiment of the present disclosure will be described below in detail with reference to the drawings. The same or corresponding parts in the drawings have the same reference characters allotted, and description thereof will not be repeated.

### [Configuration of Liquid Chromatograph]

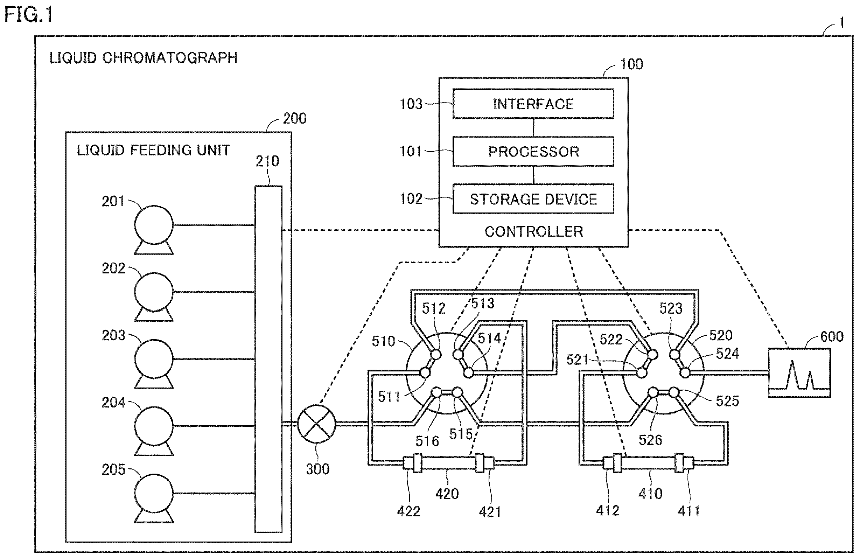

Fig. 1 shows a configuration of a liquid chromatograph 1. In an example implementation, liquid chromatograph 1 is used for analysis of SARA components.

As shown in Fig. 1, liquid chromatograph 1 includes a controller 100, a liquid feeding unit 200, a sampler 300, a first separation column 410, a second separation column 420, a first switch valve 510, a second switch valve 520, and a detector 600.

Controller 100 controls an operation of liquid chromatograph 1. Controller 100 includes a processor 101, a storage device 102, and an interface 103. In an example implementation, as processor 101 executes a program stored in storage device 102, controller 100 controls an operation of liquid chromatograph 1. Processor 101 may execute a program stored in a storage medium detachable from controller 100. Interface 103 is implemented by a communication interface (e.g., network card). Processor 101 communicates with another element (such as sampler 300) of liquid chromatograph 1 and communicates with a device external to liquid chromatograph 1, via interface 103.

Liquid feeding unit 200 feeds a solution used as a mobile phase to a flow path for the mobile phase which includes first switch valve 510 and second switch valve 520. Thus, the mobile phase is supplied to first separation column 410 and/or second separation column 420.

More specifically, liquid feeding unit 200 includes five liquid feed pumps 201 to 205 and a switch unit 210. Each of liquid feed pumps 201 to 204 is connected to a tank containing a corresponding one of four types of mobile phases used in the SARA analysis and feeds its corresponding mobile phase toward switch unit 210.

The four types of mobile phases are composed of a first mobile phase (e.g., hexane), which is a mobile phase for extraction of a saturate component, a second mobile phase (e.g., a mixed solution of hexane (94%) and chloroform (6%)), which is a mobile phase for extraction of a resin component, a third mobile phase (e.g., a mixed solution of methanol (15%), acetone (15%), and chloroform (70%)), which is a mobile phase for extraction of an asphaltene component, and a fourth mobile phase (e.g., chloroform), which is a mobile phase for extraction of an aromatic component.

Liquid feed pump 205 is connected to a tank containing a cleaning liquid for first separation column 410 and second separation column 420 and feeds the cleaning liquid toward switch unit 210. The cleaning liquid may be the first mobile phase, the second mobile phase, the third mobile phase, and/or the fourth mobile phase described above. In this case, liquid feed pump 205 may not be included in liquid chromatograph 1.

Switch unit 210 switches a pump that feeds a mobile phase toward first switch valve 510 from among liquid feed pumps 201 to 205. In an example implementation, switch unit 210 includes five introduction ports each connected to a corresponding one of liquid feed pumps 201 to 205, five solenoid valves each provided in a corresponding one of the five introduction ports, and one outlet port coupled to sampler 300. Switch unit 210 switches opening/closing of each of the five solenoid valves to couple part of the five introduction ports to the one outlet port, thereby switching the pump.

Sampler 300 supplies an analysis sample toward the flow path. In the example of Fig. 1, sampler 300 is directly coupled to a port 516 of first switch valve 510. In other words, the flow path including first switch valve 510 and second switch valve 520 is configured to feed the mobile phase, fed from the liquid feeding unit, via (a sample introduction part of) sampler 300 to first switch valve 510. In analyzing the SARA components, thus, liquid chromatograph 1 requires no additional element (such as a switch valve) for feeding the sample and the mobile phase to first switch valve 510 in a portion of the flow path which extends from sampler 300 to first switch valve 510. This avoids an increase in the cost for manufacturing liquid chromatograph 1 that analyzes SARA components.

Each of first separation column 410 and second separation column 420 is supplied with the sample as well as the mobile phase, thereby separating target components included in the sample. Each of first separation column 410 and second separation column 420 is housed in a column oven (not shown) and is maintained in the column oven at a temperature set by an analysis method.

The opposite ends of first separation column 410 are illustrated as an end 411 and an end 412. In first separation column 410, a flow from end 411 to end 412 is referred to as a flow in the "forward direction". A flow from end 412 to end 411 is referred to as a flow in the "reverse direction" (backflash).

The opposite ends of second separation column 420 are illustrated as an end 421 and an end 422. In second separation column 420, a flow from end 421 to end 422 is referred to as a flow in the "forward direction". A flow from end 422 to end 421 is referred to as a flow in the "reverse direction" (backflash).

When liquid chromatograph 1 is used for analysis of SARA components, alkyl nitrile may be used as a filler of first separation column 410. In other words, a cyano column may be used as first separation column 410. Silica may be used as a filler of second separation column 420. In other words, a silica column may be used as second separation column 420.

Detector 600 analyzes a sample supplied from first separation column 410 and/or second separation column 420. Detector 600 is implemented by, for example, an ultraviolet-visible spectrophotometer, a diode array detector, and/or a differential refractive index detector.

Each of first switch valve 510 and second switch valve 520 is implemented by, for example, a 6-port, 2-position switch valve. First switch valve 510 includes six ports 511 to 516. Second switch valve 520 includes six ports 521 to 526.

First switch valve 510 is coupled to second separation column 420. More specifically, port 513 is coupled to end 421 of second separation column 420. Port 511 is coupled to end 422 of second separation column 420.

Second switch valve 520 is coupled to first separation column 410. More specifically, port 525 is coupled to end 411 of first separation column 410. Port 521 is coupled to end 412 of first separation column 410.

### [Four Forms of Flow Path]

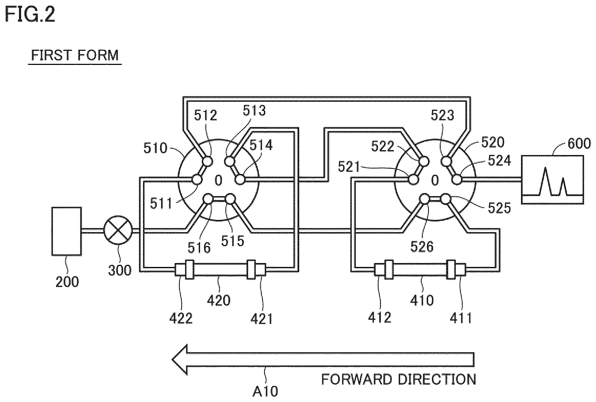

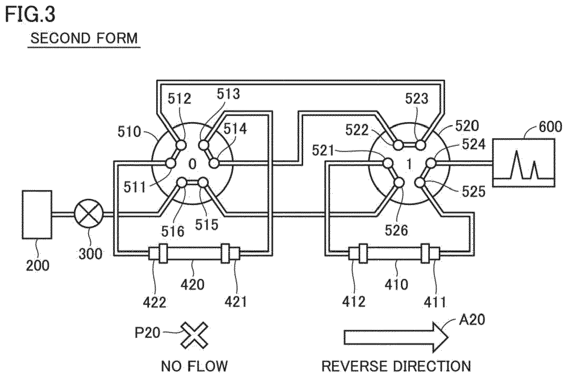

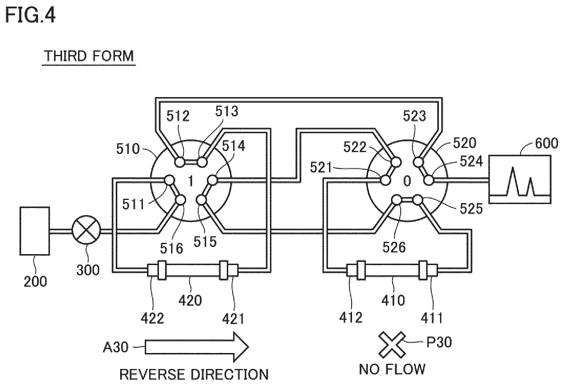

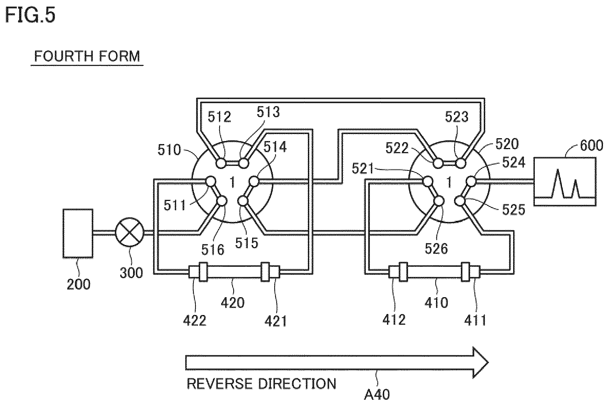

In liquid chromatograph 1, two positions of each of first switch valve 510 and second switch valve 520 are combined to form four forms (first to fourth forms) in the flow path including first switch valve 510 and second switch valve 520. Fig. 2 shows the first form of the flow path. Fig. 3 shows the second form of the flow path. Fig. 4 shows the third form of the flow path. Fig. 5 shows the fourth form of the flow path. Two positions of each of first switch valve 510 and second switch valve 520 and the four forms of the flow path will be described below with reference to Figs. 2 to 5.

### <Two Positions of First Switch Valve 510>

The two positions of first switch valve 510 are referred to as position 0 and position 1. The positions of first switch valve 510 are additionally indicated in Figs. 2 to 5.

Position 0 of first switch valve 510 is shown in, for example, Fig. 2. At this position, port 511 is coupled to port 512, port 513 is coupled to port 514, and port 515 is coupled to port 516.

Position 1 of first switch valve 510 is shown in, for example, Fig. 4. At this position, port 511 is coupled to port 516, port 513 is coupled to port 512, and port 515 is coupled to port 514.

### <Two Positions of Second Switch Valve 520>

The two positions of second switch valve 520 are referred to as position 0 and position 1. The positions of second switch valve 520 are added in Figs. 2 to 5.

Position 0 of second switch valve 520 is shown in, for example, Fig. 2. At this position, port 521 is coupled to port 522, port 523 is coupled to port 524, and port 525 is coupled to port 526.

Position 1 of second switch valve 520 is shown in, for example, Fig. 3. At this position, port 521 is coupled to port 526, port 523 is coupled to port 522, and port 525 is coupled to port 524.

### <First Form>

In the first form, the position of each of first switch valve 510 and second switch valve 520 is "position 0" as shown in Fig. 2.

In the first form, the mobile phase introduced from liquid feeding unit 200 into port 516 of first switch valve 510 is fed to detector 600 via port 515, port 526, port 525, end 411, end 412, port 521, port 522, port 514, port 513, end 421, end 422, port 511, port 512, port 523, and port 524. In the first form, thus, the mobile phase flows through first separation column 410 and second separation column 420 in the forward direction as indicated by an arrow A10.

### <Second Form>

In the second form, the position of first switch valve 510 is "position 0", and the position of second switch valve 520 is "position 1", as shown in Fig. 3.

In the second form, the mobile phase introduced from liquid feeding unit 200 into port 516 of first switch valve 510 is fed to detector 600 via port 515, port 526, port 521, end 412, end 411, port 525, and port 524. In the second form, thus, the mobile phase flows through first separation column 410 in the reverse direction as indicated by an arrow A20, but the mobile phase does not flow through second separation column 420 as schematically indicated by an icon P20. In other words, second separation column 420 is separated from the flow path in the second form.

### <Third Form>

In the third form, the position of first switch valve 510 is "position 1", and the position of second switch valve 520 is "position 0", as shown in Fig. 4.

In the third form, the mobile phase introduced from liquid feeding unit 200 to port 516 of first switch valve 510 is fed to detector 600 via port 511, end 422, end 421, port 513, port 512, port 523, and port 524. In the third form, thus, the mobile phase flows through second separation column 420 in the reverse direction as indicated by an arrow A30, but the mobile phase does not flow through first separation column 410 as schematically indicated by an icon P30. In other words, first separation column 410 is separated from the flow path in the third form.

### <Fourth Form>

In the fourth form, the position of each of first switch valve 510 and second switch valve 520 is "position 1" as shown in Fig. 5.

In the fourth form, the mobile phase introduced from liquid feeding unit 200 to port 516 of first switch valve 510 is fed to detector 600 via port 511, end 422, end 421, port 513, port 512, port 523, port 522, port 514, port 515, port 526, port 521, end 412, end 411, port 525, and port 524. In the fourth form, thus, the mobile phase flows through first separation column 410 and second separation column 420 in the reverse direction as indicated by an arrow A40.

### [Process Flow]

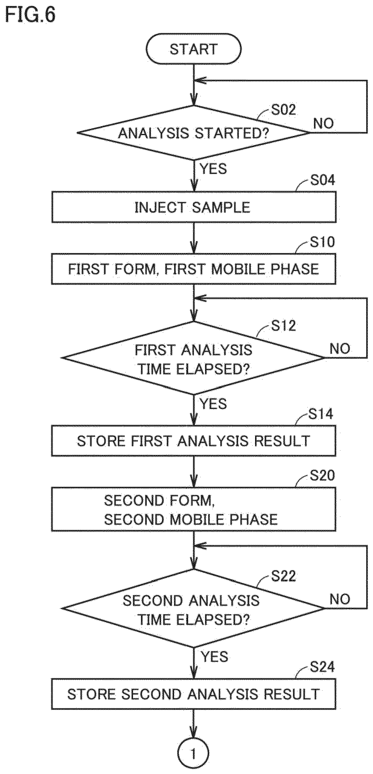

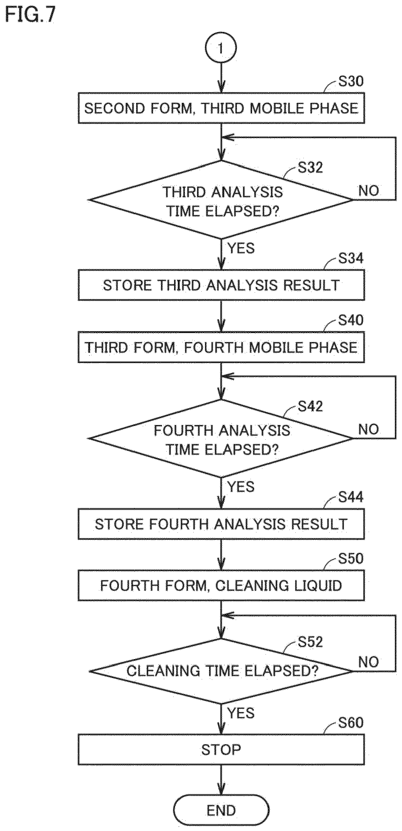

Figs. 6 and 7 show a flowchart of a process performed by liquid chromatograph 1 for analysis of SARA components. In an example implementation, as processor 101 executes a given program, the process of Figs. 6 and 7 is performed in liquid chromatograph 1.

Referring to Fig. 6, at step S10, liquid chromatograph 1 first determines whether a timing for starting analysis of SARA components has arrived. In response to a given operation having been performed on an operation key (not shown) of liquid chromatograph 1, in response to liquid chromatograph 1 externally having received an instruction to start an analysis, and/or upon arrival of a pre-registered time, liquid chromatograph 1 may determine that the above-mentioned timing has arrived.

Liquid chromatograph 1 repeats the control of step S02 until determining that the above-mentioned timing has arrived (NO at step S02), and when determining that the above-mentioned timing has arrived (YES at step S02), moves the control to step S04.

At step S04, liquid chromatograph 1 causes sampler 300 to inject the sample (e.g., a sample for analysis of SARA components) into the flow path including first switch valve 510 and second switch valve 520.

At step S10, liquid chromatograph 1 forms the first form (Fig. 2) in the flow path including first switch valve 510 and second switch valve 520 and causes liquid feeding unit 200 to feed the first mobile phase toward first switch valve 510.

The first form may be formed as controller 100 switches the position of each of first switch valve 510 and second switch valve 520 to "position 0". The first mobile phase may be fed as controller 100 causes liquid feeding unit 200 to couple liquid feed pump 201 to the above-mentioned outlet port.

At step S12, liquid chromatograph 1 determines whether a first analysis time has elapsed from start of feeding of the first mobile phase (step S10). The first analysis time is a predetermined time for an analysis of a saturate component among the SARA components. The first analysis time may be set by a user as appropriate. The information for identifying the first analysis time may be stored in storage device 102. Liquid chromatograph 1 repeats the control of step S12 until determining that the first analysis time has elapsed (NO at step S12), and when determining that the first analysis time has elapsed (YES at step S12), moves the control to step S14.

At step S14, liquid chromatograph 1 stores, in storage device 102, a detection result (first analysis result) obtained by detector 600. In an example implementation, the first analysis result includes an analysis result of the saturate component in the sample.

At step S20, liquid chromatograph 1 forms the second form (Fig. 3) in the flow path including first switch valve 510 and second switch valve 520 and causes liquid feeding unit 200 to feed the second mobile phase toward first switch valve 510.

The second form may be formed as controller 100 switches the position of first switch valve 510 to "position 0" and switches the position of second switch valve 520 to "position 1". The second mobile phase may be fed as controller 100 causes liquid feeding unit 200 to couple liquid feed pump 202 to the above-mentioned outlet port.

At step S22, liquid chromatograph 1 determines whether a second analysis time has elapsed from start of feeding of the second mobile phase (step S20). The second analysis time is a predetermined time for an analysis of a resin component among the SARA components. The second analysis time may be set by a user as appropriate. The information for identifying the second analysis time may be stored in storage device 102. Liquid chromatograph 1 repeats the control of step S22 until determining that the second analysis time has elapsed (NO at step S22), and when determining that the second analysis time has elapsed (YES at step S22), moves the control to step S24.

At step S24, liquid chromatograph 1 stores, in storage device 102, a detection result (second analysis result) obtained by detector 600. In an example implementation, the second analysis result includes an analysis result of the resin component in the sample.

Referring to Fig. 7, at step S30, liquid chromatograph 1 forms the second form (Fig. 3) in the flow path including first switch valve 510 and second switch valve 520 and causes liquid feeding unit 200 to feed the third mobile phase toward first switch valve 510.

The third mobile phase may be fed as controller 100 causes liquid feeding unit 200 to couple liquid feed pump 203 to the above-mentioned outlet port.

At step S32, liquid chromatograph 1 determines whether a third analysis time has elapsed from start of feeding of the third mobile phase (step S30). The third analysis time is a predetermined time for an analysis of an asphaltene component among the SARA components. The third analysis time may be set by a user as appropriate. The information for identifying the third analysis time may be stored in storage device 102. Liquid chromatograph 1 repeats the control of step S32 until determining that the third analysis time has elapsed (NO at step S32), and when determining that the third analysis time has elapsed (YES at step S32), moves the control to step S34.

At step S34, liquid chromatograph 1 stores, in storage device 102, a detection result (third analysis result) obtained by detector 600. In an example implementation, the third analysis result includes an analysis result of the asphaltene component in the sample.

At step S40, liquid chromatograph 1 forms the third form (Fig. 4) in the flow path including first switch valve 510 and second switch valve 520 and causes liquid feeding unit 200 to feed the fourth mobile phase toward first switch valve 510.

The third form may be formed as controller 100 switches the position of first switch valve 510 to "position 1" and switches the position of second switch valve 520 to "position 0". The fourth mobile phase may be fed as controller 100 causes liquid feeding unit 200 to couple liquid feed pump 204 to the above-mentioned outlet port.

At step S42, liquid chromatograph 1 determines whether a fourth analysis time has elapsed from start of feeding of the fourth mobile phase (step S40). The fourth analysis time is a predetermined time for an analysis of an aromatic component among the SARA components. The fourth analysis time may be set by a user as appropriate. The information for identifying the fourth analysis time may be stored in storage device 102. Liquid chromatograph 1 repeats the control of step S42 until determining that the fourth analysis time has elapsed (NO at step S42), and when determining that the fourth analysis time has elapsed (YES at step S42), moves the control to step S44.

At step S44, liquid chromatograph 1 stores, in storage device 102, a detection result (fourth analysis result) obtained by detector 600. In an example implementation, the fourth analysis result includes an analysis result of the aromatic component in the sample.

At step S50, liquid chromatograph 1 forms the fourth form (Fig. 5) in the flow path including first switch valve 510 and second switch valve 520 and causes liquid feeding unit 200 to feed the cleaning liquid toward first switch valve 510.

The fourth form may be formed as controller 100 switches the position of each of first switch valve 510 and second switch valve 520 to "position 1". The cleaning liquid may be fed as controller 100 causes liquid feeding unit 200 to couple liquid feed pump 205 to the above-mentioned outlet port.

At step S52, liquid chromatograph 1 determines whether a cleaning time has elapsed from start of feeding of the cleaning liquid (step S50). The cleaning time is a predetermined time for cleaning first separation column 410 and second separation column 420. The cleaning time may be set by a user as appropriate. The information for identifying the cleaning time may be stored in storage device 102. Liquid chromatograph 1 repeats the control of step S52 until determining that the cleaning time has elapsed (NO at step S52), and when determining that the cleaning time has elapsed (YES at S52), moves the control to step S54.

At step S60, liquid chromatograph 1 stops the operation of each element. Then, liquid chromatograph 1 ends the process of Figs. 6 and 7.

In liquid chromatograph 1 described above, controller 100 combines two states of each of first switch valve 510 and second switch valve 520 to form the first to third forms in the flow path including first switch valve 510 and second switch valve 520, thereby providing SARA analysis using first separation column 410 and second separation column 420 in liquid chromatograph 1.

In the second form, second separation column 420 is separated from the flow path. In the third form, first separation column 410 is separated from the flow path. In other words, during backflash of one of two separation columns, the other separation column is separated from the flow path. In liquid chromatograph 1, contamination can be prevented, and premature deterioration of the separation column due to pressure fluctuations can be prevented.

In liquid chromatograph 1, the use of a backflow check valve is not required for formation of the first to third forms. This can reduce a system capacity and carry-over in liquid chromatograph 1.

Controller 100 further forms the fourth form in the flow path and cleans first separation column 410 and second separation column 420 (steps S50, S52).

In the fourth form, the solution introduced from liquid feeding unit 200 flows through first separation column 410 and second separation column 420 in the reverse direction. In cleaning at steps S50, S52, thus, the cleaning liquid flows through first separation column 410 and second separation column 420 in the reverse direction. In the fourth form, the entire flow path is cleaned by backflash, thus reducing cross-contamination between analyses.

In place of cleaning at steps S50, S52, or in addition to cleaning at steps S50, S52, cleaning using the first to fourth mobile phases used in the analyses of four components may be performed.

For example, after step S44, liquid chromatograph 1 may flow the fourth mobile phase through a third flow path, flow the third mobile phase through a second flow path, flow the second mobile phase through the second flow path, and flow the first mobile phase through a first flow path. Thus, after the analyses of four components, the mobile phases used in the analyses of four components are flowed in the reverse order of analysis. Liquid chromatograph 1 may further perform cleaning of steps S50, S52 after the cleaning using the first to fourth mobile phases.

### [Aspects]

A person skilled in the art will understand that the illustrative embodiments described above are specific examples of the following aspect.

(Clause 1) A liquid chromatograph according to an aspect may include: a first column; a second column; a liquid feeding unit configured to feed a mobile phase to at least one of the first column and the second column; a first switch valve having at least two connection states; a second switch valve connected to the first switch valve and having at least two connection states; and a control unit configured to combine one of the at least two connection states of the first switch valve and one of the at least two connection states of the second switch valve to form a first form, a second form, and a third form in a flow path including the first switch valve and the second switch valve. In the first form, the mobile phase from the liquid feeding unit may be fed in order of a first end of the first column, a second end of the first column, a first end of the second column, and a second end of the second column. In the second form, the mobile phase from the liquid feeding unit may not be introduced into the first column, and the mobile phase from the liquid feeding unit may be fed from the second end of the second column to the first end of the second column. In the third form, the mobile phase from the liquid feeding unit may be fed from the second end of the first column to the first end of the first column, and the mobile phase from the liquid feeding unit may not be introduced into the second column.

The liquid chromatograph according to clause 1 provides a configuration of a liquid chromatograph that implements a method of analyzing SARA components.

(Clause 2) In the liquid chromatograph according to clause 1, the at least two connection states of the first switch valve may include a first state and a second state. In the first state, the liquid feeding unit may be coupled to the second switch valve, and the second switch valve may be coupled to the first end of the second column. In the second state, the liquid feeding unit may be coupled to the second end of the second column, the at least two connection states of the second switch valve may include a third state and a fourth state. In the third state, the second end of the first column may be coupled to the first switch valve, and the second end of the first column may be coupled to the first switch valve. In the fourth state, the first switch valve may be coupled to the second end of the second column. The control unit may be configured to bring the first switch valve into the first state and bring the second switch valve into the third state to form the first form, bring the first switch valve into the first state and bring the second switch valve into the fourth state to form the second form, and bring the first switch valve into the second state and bring the second switch valve into the third state to form the third form.

The liquid chromatograph according to clause 2 provides specific states of the first switch valve and the second switch valve, thereby easily implementing a method of analyzing SARA components in the liquid chromatograph.

(Clause 3) In the liquid chromatograph according to clause 1 or 2, the liquid feeding unit may be configured to selectively feed any one of a first mobile phase, a second mobile phase, a third mobile phase, and a fourth mobile phase toward the first switch valve as the mobile phase. The control unit may be configured to cause the liquid feeding unit to feed the first mobile phase toward the first switch valve when the first form is formed in the flow path, cause the liquid feeding unit to feed the second mobile phase toward the first switch valve when the second form is formed in the flow path, cause the liquid feeding unit to feed the third mobile phase toward the first switch valve when the second form is formed in the flow path, and cause the liquid feeding unit to feed the fourth mobile phase toward the first switch valve when the third form is formed in the flow path.

The liquid chromatograph according to clause 3 feeds appropriate mobile phases to the first column and the second column in analysis of SARA components.

(Clause 4) The liquid chromatograph according to any one of clauses 1 to 3 may further include a detector configured to derive a detection result of components of a solution. In the first form, the first switch valve may couple the second end of the second column to the first switch valve, and the second switch valve may introduce the solution introduced from the second end of the second column into the detector. In the second form, the first switch valve may separate the second column from the liquid feeding unit, and the second switch valve may couple the first end of the second column to the detector. In the third form, the first switch valve may couple the first end of the second column to the detector, and the second switch valve may separate the first column from the liquid feeding unit.

The liquid chromatograph according to clause 4 prevents contamination and prevent premature deterioration of a column due to pressure fluctuations.

(Clause 5) In the liquid chromatograph according to any one of clauses 1 to 4, the control unit may be configured to combine one of the at least two connection states of the first switch valve and one of the at least two connection states of the second switch valve to further form a fourth form in the flow path. In the fourth form, the mobile phase from the liquid feeding unit may be fed from the second end of the first column to the first end of the first column and fed from the second end of the second column to the first end of the second column.

The liquid chromatograph according to clause 5 forms a flow of the mobile phase by which the first column and the second column are cleaned.

(Clause 6) In the liquid chromatograph according to clause 5, the control unit may be configured to cause the liquid feeding unit to feed a cleaning liquid toward the first switch valve when the fourth form is formed in the flow path.

The liquid chromatograph according to clause 6 cleans the first column and the second column with the cleaning liquid.

(Clause 7) The liquid chromatograph according to any one of clauses 1 to 6 may further include a sampler provided between the liquid feeding unit and the first switch valve and configured to supply a sample toward the flow path.

The liquid chromatograph according to clause 7 supplies the sample to the first column and the second column in analysis of SARA components.

(Clause 8) In the liquid chromatograph according to any one of clauses 1 to 7, the flow path may be configured to feed the mobile phase fed from the liquid feeding unit to the first switch valve.

The liquid chromatograph according to clause 8 needs no additional element (such as a valve) for feeding the mobile phase fed from the liquid feeding unit to the first switch valve in analysis of SARA components, thus avoiding an increase in the cost for manufacturing the liquid chromatograph.

It should be appreciated that the embodiments disclosed herein are illustrative in every sense and are not limitative. The scope of the present disclosure is defined by the terms of the claims, rather than the embodiments described above, and is intended to include any modifications within the scope and meaning equivalent to the terms of the claims.

### REFERENCE SIGNS LIST

1 liquid chromatograph; 100 controller; 200 liquid feeding unit; 300 sampler; 410 first separation column; 420 second separation column; 510 first switch valve; 520 second switch valve; 600 detector.

## Claims

1. A liquid chromatograph comprising:
a first column;
a second column;
a liquid feeding unit configured to feed a mobile phase to at least one of the first column and the second column;
a first switch valve having at least two connection states;
a second switch valve connected to the first switch valve and having at least two connection states; and
a control unit configured to combine one of the at least two connection states of the first switch valve and one of the at least two connection states of the second switch valve to form a first form, a second form, and a third form in a flow path including the first switch valve and the second switch valve, wherein
in the first form, the mobile phase from the liquid feeding unit is fed in order of a first end of the first column, a second end of the first column, a first end of the second column, and a second end of the second column,
in the second form, the mobile phase from the liquid feeding unit is not introduced into the first column, and the mobile phase from the liquid feeding unit is fed from the second end of the second column to the first end of the second column, and
in the third form, the mobile phase from the liquid feeding unit is fed from the second end of the first column to the first end of the first column, and the mobile phase from the liquid feeding unit is not introduced into the second column.

2. The liquid chromatograph according to claim 1, wherein
the at least two connection states of the first switch valve include a first state and a second state,
in the first state, the liquid feeding unit is coupled to the second switch valve, and the second switch valve is coupled to the first end of the second column,
in the second state, the liquid feeding unit is coupled to the second end of the second column,
the at least two connection states of the second switch valve include a third state and a fourth state,
in the third state, the second end of the first column is coupled to the first switch valve, and the second end of the first column is coupled to the first switch valve,
in the fourth state, the first switch valve is coupled to the second end of the second column, and
the control unit is configured to
bring the first switch valve into the first state and bring the second switch valve into the third state to form the first form,
bring the first switch valve into the first state and bring the second switch valve into the fourth state to form the second form, and
bring the first switch valve into the second state and bring the second switch valve into the third state to form the third form.

3. The liquid chromatograph according to claim 1, wherein
the liquid feeding unit is configured to selectively feed any one of a first mobile phase, a second mobile phase, a third mobile phase, and a fourth mobile phase toward the first switch valve as the mobile phase, and
the control unit is configured to
cause the liquid feeding unit to feed the first mobile phase toward the first switch valve when the first form is formed in the flow path,
cause the liquid feeding unit to feed the second mobile phase toward the first switch valve when the second form is formed in the flow path,
cause the liquid feeding unit to feed the third mobile phase toward the first switch valve when the second form is formed in the flow path, and
cause the liquid feeding unit to feed the fourth mobile phase toward the first switch valve when the third form is formed in the flow path.

4. The liquid chromatograph according to claim 1, further comprising a detector configured to derive a detection result of components of a solution, wherein
in the first form,
the first switch valve couples the second end of the second column to the first switch valve, and
the second switch valve introduces the solution introduced from the second end of the second column into the detector,
in the second form,
the first switch valve separates the second column from the liquid feeding unit, and
the second switch valve couples the first end of the second column to the detector, and
in the third form,
the first switch valve couples the first end of the second column to the detector, and
the second switch valve separates the first column from the liquid feeding unit.

5. The liquid chromatograph according to claim 1, wherein
the control unit is configured to combine one of the at least two connection states of the first switch valve and one of the at least two connection states of the second switch valve to further form a fourth form in the flow path, and
in the fourth form, the mobile phase from the liquid feeding unit is fed from the second end of the first column to the first end of the first column and fed from the second end of the second column to the first end of the second column.

6. The liquid chromatograph according to claim 5, wherein the control unit is configured to cause the liquid feeding unit to feed a cleaning liquid toward the first switch valve when the fourth form is formed in the flow path.

7. The liquid chromatograph according to claim 1, further comprising a sampler provided between the liquid feeding unit and the first switch valve and configured to supply a sample toward the flow path.

8. The liquid chromatograph according to claim 1, wherein the flow path is configured to feed the mobile phase fed from the liquid feeding unit to the first switch valve.
